# EUROPÄISCHE PATENTANMELDUNG

(11) **EP 2 820 983 A1**
(43) Veröffentlichungstag der Anmeldung: **07.01.2015**
(21) Anmeldenummer: 14173469.9
(22) Anmeldetag: 23.06.2014
(51) Int. Cl.: A47J 31/44

(54) **Emulgiervorrichtung für einen Milchschäumer einer Kaffeemaschine**

(30) Priorität: 02.07.2013 DE 102013212844
(71) Anmelder: BSH Bosch und Siemens Hausgeräte GmbH, 81739 München (DE)
(72) Erfinder: Hauser, Andreas, 83352 Altenmarkt (DE); Nöth, Christoph, 84558 Tyrlaching (DE)

(57) **Zusammenfassung**

Die Erfindung betrifft eine Emulgiervorrichtung (1) für einen Milchschäumer einer Kaffeemaschine, mit einem Gehäuse (2), in welchem eine Emulgierkammer (3) zum Emulgieren von Milchschaum vorgesehen ist, wobei die Emulgierkammer (3) als sich entlang einer axialen Richtung (A) erstreckender konusartiger Hohlkörper ausgebildet ist. Im Bereich eines ersten axialen Endabschnitts (4) der Emulgierkammer (3) ist eine Zuführungsleitung (6) zum Einbringen von zu emulgierendem Milchschaum, und im Bereich eines zweiten axialen Endabschnitts (5) der Emulgierkammer (3) ist wenigstens eine Abführungsleitung (7a, 7b) zum Abführen von emulgiertem Milchschaum vorgesehen. Im Bereich des zweiten axialen Endabschnitts (5) der Emulgierkammer (3) ist ein Reflektorelement (8) angeordnet, welches den in die Emulgierkammer (3) eingebrachten Milchschaum in verschiedene Richtungen in die Emulgierkammer (3) zurückwirft, bevor dieser die Emulgierkammer (3) verlässt.

## Beschreibung

Die vorliegende Erfindung betrifft eine Emulgiervorrichtung für einen Milchschäumer einer Kaffeemaschine. Die Erfindung betrifft des Weiteren einen Milchschäumer zum Aufschäumen von Milch mit einer solchen Emulgiervorrichtung sowie eine Kaffeemaschine mit einem solchen Milchschäumer.

Kaffeemaschinen werden zunehmend in Kompaktbauweise hergestellt und sind auch hinsichtlich ihres Designs optimiert, um einem Benutzer oder Betrachter der Kaffeemaschine ein Gefühl von besonders hoher Wertigkeit zu vermitteln. Um die Kaffeemaschine möglichst kompakt aufzubauen, muss auch der in einer modernen Kaffeemaschine häufig integrierte Milchschäumer zum Aufschäumen von Milch möglichst klein dimensioniert sein. Eine zentrale Komponente eines Milchschäumers ist dabei die sog. Emulgierkammer, in welcher der mittels des Milchschäumers hergestellte Milchschaum zum Zwecke der Homogenisierung verwirbelt und durchmischt werden soll, bevor er über einen Getränkeauslass nach außen aus der Kaffeemaschine abgegeben wird. Grundsätzlich gilt, dass mit zunehmendem Volumen der Emulgierkammer eine verbesserte Durchmischung, Beruhigung und Dämpfung erzielt werden können; dies bedeutet jedoch, dass der für die Emulgierkammer benötigte Platzbedarf steigt, was wiederum besagtem räumlich kompakten Aufbau des Milchschäumers entgegensteht.

Die vorliegende Erfindung beschäftigt sich daher mit dem Problem, eine verbesserte Ausführungsform für eine Emulgiervorrichtung für einen Milchschäumer anzugeben, welche sich insbesondere durch einen räumlich besonders kompakten Aufbau auszeichnet, ohne dass die mittels der Emulgierkammer erzielbare Durchmischung des in die Emulgierkammer eingebrachten Milchschaums beeinträchtigt wird.

Dieses Problem wird gelöst durch den Gegenstand der unabhängigen Patentansprüche. Bevorzugte Ausführungsformen sind Gegenstand der abhängigen Ansprüche.

Die Erfindung beruht auf dem allgemeinen Gedanken, eine Emulgiervorrichtung für einen Milchschäumer einer Kaffeemaschine in der Art eines sich entlang einer axialen Richtung erstreckenden konusartigen Hohlkörpers auszubilden und im Bereich eines axialen Endabschnitts der Emulgierkammer ein Reflektorelement anzuordnen, welches derart ausgebildet ist, dass in die Emulgierkammer eingebrachter Milchschaum am Reflektorelement reflektiert, das heißt in die Emulgierkammer zurückgeworfen wird, bevor dieser die Emulgierkammer wieder verlässt. Durch eine derartige einmalige oder mehrmalige Reflexion des in die Emulgierkammer eingebrachten Milchschaums am Reflektorelement kann sichergestellt werden, dass dieser auf optimale Weise durchmischt und somit homogenisiert wird, bevor er die Emulgierkammer wieder verlässt, ohne dass hierzu ein besonders großes Emulgierkammer-Volumen erforderlich ist. Vielmehr kann mittels des erfindungsgemäßen Reflektorelements das Volumen der Emulgierkammer im Vergleich zu herkömmlichen Emulgiervorrichtungen relativ klein ausgelegt werden, was wiederum die angestrebte kompakte Bauweise der Emulgiervorrichtung erlaubt. Ein weiterer Vorteil der erfindungsgemäßen Ausbildung der Emulgiervorrichtung mit einem Reflektorelement besteht darin, dass aufgrund des relativ geringen Volumens der Emulgierkammer die maximale Menge an in die Emulgierkammer einbringbarem Milchschaum relativ gering ist. Auf diese Weise wird verhindert, dass sich eine zu große Menge an Milchschaum in der Emulgierkammer ansammeln und sich in der Emulgierkammer auf unerwünschte Weise abkühlen kann, bevor er diese wieder verlässt. Ein solches unerwünschtes Abkühlen des Milchschaums beim Durchmischen bzw. Homogenisieren in der Emulgierkammer kann somit weitgehend oder sogar vollständig vermieden werden.

In einer bevorzugten Ausführungsform kann das Reflektorelement in der Art eines Kugelsegments, insbesondere als Halbkugel, ausgebildet sein. Dies ist in konkaver Weise der Emulgierkammer zugewandt, so dass der dort auftreffende Milchschaum zentriert in die Emulgierkammer zurückgeworfen wird. Auf diese Weise können mittels des Reflektorelements besonders gute Reflexionseigenschaften für einen in die Emulgierkammer eingebrachten Milchschaumstrahl erzielt werden. Durch die Kugelsegment- bzw. halbkugelartige Ausbildung des Reflektorelements wird ein unter einem bestimmten Einfallswinkel ein auf das Reflektorelement treffender Milchschaumstrahl derart reflektiert, dass er quasi vom Reflektorelement in einen zentralen Bereich der Emulgierkammer zurückgeworfen und somit mit dem einfallenden Milchschaumstrahl durchmischt wird. Mittels der kugelsegmentartigen Ausbildung wird zudem erreicht, dass der vom Reflektorelement reflektierte Milchschaumstrahl auf eine in die Emulgierkammer begrenzende Gehäusewand trifft und dort erneut reflektiert wird, bevor er die Emulgierkammer wieder verlässt. Mittels einer geeigneten Anordnung des Reflektorelements kann also dafür gesorgt werden, dass der über eine Zuführungsleitung in die Emulgierkammer eingebrachte Milchschaum mehrfach reflektiert wird, und zwar zum einen am Reflektorelement, zum anderen an der die Emulgierkammer umgebenden Gehäusewand des Gehäuses, bevor der Milchschaum durch eine Abführungsleitung die Emulgierkammer wieder verlässt.

Bei einer vorteilhaften Weiterbildung können genau zwei Abführungsleitungen zum Abführen von Milchschaum vorgesehen sein, die einander bezüglich der radialen Richtung der Emulgierkammer gegenüber liegen. Auf diese Weise kann der in der Emulgierkammer durchmischte Milchschaum besonders effektiv abgeführt werden, so dass eine unerwünschte Abkühlung des Milchschaums in der Emulgierkammer weitgehend oder sogar vollständig vermieden werden kann.

In einer technisch besonders einfach und somit kostengünstig herzustellenden Ausführungsform kann das Reflektorelement integral am Gehäuse der Emulgiervorrichtung ausgeformt sein. In einer alternativen Variante kann selbstverständlich auch daran gedacht sein, dass das Reflektorelement ein separates Bauteil ist, welches mittels geeigneter Befestigungsmittel am Gehäuse, insbesondere lösbar, befestigt ist.

Zur weiteren Bauraumoptimierung kann die als konusartiger Hohlkörper ausgebildete Emulgierkammer eine Querschnittsfläche aufweisen, welche entlang der axialen Richtung vom ersten zum zweiten axialen Endabschnitt hin zunimmt. Da der in die Emulgierkammer einzubringende Milchschaum üblicherweise in der Art eines Milchschaumstrahls in die Emulgierkammer eingespritzt wird, ist ein besonders großer Querschnitt im Bereich des ersten axialen Endabschnitts, in welchem die Zuführungsleitung in die Emulgierkammer mündet, nicht erforderlich. So kann die Zuführungsleitung einen Zuführungsleitungsquerschnitt aufweisen, welcher dem Querschnitt der konusartig ausgebildeten Emulgierkammer im Bereich des ersten axialen Endabschnitts entspricht. Mittels der Zunahme des Durchmessers der Emulgierkammer zum zweiten axialen Endabschnitt hin, in welchem das Reflektorelement angeordnet ist, wird das zur Durchmischung benötigte Volumen der Emulgierkammer bereitgestellt. Ein unnötiges "Totvolumen" im Bereich des ersten axialen Endabschnitts der Emulgierkammer wird auf diese Weise vermieden. Die Erfindung betrifft des Weiteren einen Milchschäumer zum Aufschäumen von Milch, wobei der Milchschäumer eine Emulgiervorrichtung mit einem oder mehreren der vorangehend genannten Merkmale aufweist. Die Zuführungsleitung der Emulgiervorrichtung ist fluidisch mit einer am Gehäuse vorgesehenen Milch-Zuführung zum Einbringen von Milch in die Emulgierkammer und mit einer ebenfalls am Gehäuse bzw. an einem Deckel vorgesehenen Wasserdampf-Zuführung zum Zuführen von Wasserdampf in die Emulgierkammer verbunden.

Die Erfindung betrifft des Weiteren eine Kaffeemaschine mit einer Brühkammer und einem vorangehend vorgestellten Milchschäumer.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Schnittdarstellung durch die erfindungsgemäße Emulgiervorrichtung,
- Fig. 2: eine Darstellung wie in Fig. 1, jedoch bei einer anderen Ausführungsform.

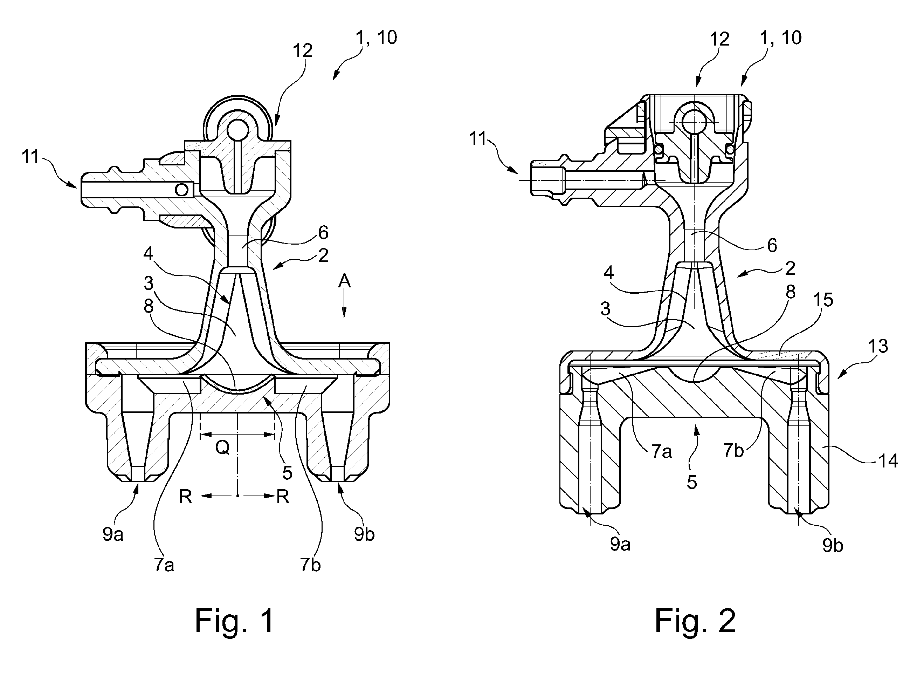

In den Fig. 1 und 2 ist eine erfindungsgemäße Emulgiervorrichtung in einem Längsschnitt dargestellt und mit dem Bezugszeichen 1 bezeichnet. Die Emulgiervorrichtung 1 weist ein Gehäuse 2 auf, in welchem eine Emulgierkammer 3 zum Emulgieren von Milchschaum vorgesehen ist. Die Emulgierkammer 3 erstreckt sich entlang einer axialen Richtung A und ist als sich entlang dieser Richtung A erstreckender konusartiger Hohlkörper ausgebildet. Die Emulgierkammer 3 weist entlang der axialen Richtung A einen Querschnitt Q (Durchmesser) auf, der von einem ersten axialen Endabschnitt 4 der Emulgierkammer 3 zu einem zweiten axialen Endabschnitt 5 hin zunimmt. Im Bereich des ersten axialen Endabschnitts 4 der Emulgierkammer 3 ist eine Zuführungsleitung 6 zum Einbringen von zu emulgierendem Milchschaum in die Emulgierkammer 3 vorgesehen. Im Bereich des zweiten axialen Endabschnitts 5 sind zwei Abführungsleitungen 7a, 7b zum Abführen von der Emulgierkammer 3 emulgierten Milchschaum vorgesehen.

In dem in den Figuren gezeigten Beispiel geht der zweite axiale Endabschnitt 5 radial nach außen in die beiden Abführungsleitungen 7a, 7b über. Im Bereich des zweiten Endabschnitts 5 der Emulgierkammer 3 ist nun ein Reflektorelement 8 derart angeordnet, dass in die Emulgierkammer 3 eingebrachter Milchschaum am Reflektorelement 8 reflektiert wird, bevor dieser die Emulgierkammer 3 wieder durch die Abführungsleitungen 7a, 7b verlässt. Die Abführungsleitungen 7a, 7b gemäß der Fig. 2 sind dabei zu den Milchschaum-Auslassöffnungen 9a, 9b hin geneigt.

Durch eine derartige einmalige oder mehrmalige Reflexion des in die Emulgierkammer 3 eingebrachten Milchschaums am Reflektorelement 8 wird sichergestellt, dass dieser besonders gut durchmischt wird, bevor er die Emulgierkammer 3 wieder verlässt, ohne dass hierzu ein besonders großes Emulgierkammer-Volumen erforderlich ist. Vielmehr kann mittels des erfindungsgemäßen Reflektorelements 8 das Volumen der Emulgierkammer 3 im Vergleich zu herkömmlichen Emulgiervorrichtungen relativ klein ausgelegt werden, was wiederum die angestrebte kompakte Bauweise der Emulgiervorrichtung 1 erlaubt.

Das Reflektorelement 8 kann wie in den Fig. 1 und 2 gezeigt in der Art eines Kugel- oder Bogensegments ausgebildet sein. Insbesondere ist eine Realisierung in Form einer Halbkugel vorstellbar. Das Reflektorelement 8 ist dabei in eine Wandung des Gehäuses 2 integriert und konkav zur Emulgierkammer 3 geformt. In Varianten sind aber auch andere geeignete Geometrien bzw. Oberflächenkonturen des Reflektorelements 8 denkbar. Bevorzugt ist das Reflektorelement 8 gekrümmt ausgebildet, da auf diese Weise besonders gute Reflexionseigenschaften hinsichtlich des auf das Reflektorelement 8 treffenden Milchschaum erzielt werden können. Bei der in der Fig. 1 gezeigten kugel/bogensegmentartigen Ausbildung des Reflektorelements 8 wird erreicht, dass ein auf das Reflektorelement 8 unter einem bestimmten Winkel treffender Milchschaumstrahl wieder in einen zentralen Bereich der Emulgierkammer 3 reflektiert wird. Auf diese Weise wird die Durchmischung des in die Emulgierkammer 3 eingebrachten Milchschaums verbessert. Besonders gute Reflexionseigenschaften werden bei einer konkaven Ausbildung des Reflektorelements 8 erzielt, worunter auch die in der Fig. 1 gezeigte kugel-oder bogensegmentartige Ausbildung fällt. Das Reflektorelement 8 kann integral am Gehäuse 2 der Emulgiervorrichtung 1 ausgeformt sein (vgl. Fig. 2); in Varianten ist aber auch vorstellbar, dass das Reflektorelement 8 ein separates Bauteil ist, welches mittels eines geeigneten Befestigungselements am Gehäuse 2 befestigt ist (vgl. Fig. 1).

Hier ergeben sich für den Fachmann verschiedene technische Realisierungsmöglichkeiten. Insbesondere ist eine lösbare Befestigung des Reflektorelements 8 vorstellbar, so dass dieses, beispielsweise zu Reinigungszwecken, auf einfache Weise vom Gehäuse 2 demontiert und wieder an diesem angebracht werden kann. Auf diese Weise kann einem Werker auch ein einfacher Zugang zur Emulgierkammer 3, beispielsweise ebenfalls zu Reinigungszwecken o.ä. ermöglicht werden. In diesem Fall wirkt das Reflektorelement 8 gleichzeitig als eine Art Verschluss des Gehäuses 2 bzw. der Emulgierkammer 3. Die Emulgiervorrichtung 1 kann Teil eines Milchschäumers 10 sein, der die Emulgiervorrichtung 1 umfasst. Die Zuführungsleitung 6 der Emulgiervorrichtung 1 kann fluidisch mit einer Milch-Zuführung 11 zum Einbringen von Milch in die Emulgierkammer 3 und mit einer an einem Deckel 12 des Gehäuses 2 vorgesehenen Wasser-DampfZuführung zum Zuführen von Wasserdampf in die Emulgierkammer 3 verbunden sein. Die beiden Abführungsleitungen 7a, 7b sind fluidisch mit zwei Milchschaum-Auslassöffnungen 9a, 9b verbunden, über welche die der in der Emulgierkammer 3 emulgierte Milchschaum in die Umgebung abgegeben werden kann.

Bei der gemäß der Fig. 2 dargestellten Ausführungsform weist das Reflektorelement 8 eine stärkere konkave Krümmung auf und ist zudem integral mit dem Gehäuse 2 ausgebildet. Generell ist das Gehäuse 2 der Emulgiervorrichtung 1 zerlegbar ausgebildet und weist zumindest zwei, beispielsweise über eine Rastverbindung 13 miteinander verrastbare Teile 14,15 auf, nämlich ein unteres Teil 14, in welchem die Abführungsleitungen 7a,7b und das Reflektorelement 8 angeordnet sind und ein oberes Teil 15, welches im Wesentlichen die Emulgierkammer 3 bildet. Beide Teile 14,15 können dabei aus Kunststoff ausgebildet sein und die Reinigung der Emulgierkammer durch ein einfaches Lösen der Rastverbindung 13 erleichtern.

Der die Emulgiervorrichtung 1 umfassende Milchschäumer 10 kann Teil einer eine Brühkammer aufweisenden Kaffeemaschine sein.

Von besonderem Vorteil bei der erfindungsgemäßen Emulgiervorrichtung 1 ist deren Fähigkeit, einen aus der Zuführungsleitung austretenden Milchschaumstrahl zu beruhigen bzw. zu dämpfen. Mittels des Reflektorelements 8 wird der Milchschaum in der Emulgierkammer 3 stark verwirbelt, bzw. ein Gegendruck erzeugt, der dazu beiträgt die Emulgierkammer 3 vollständig mit Milchschaum zu füllen, bevor dieser diese verlässt. Das Volumen an Milchschaum in der Emulgierklammer 3 ist dabei relativ groß, wogegen das Volumen der Emulgierklammer 3 an sich klein gehalten werden kann. Von weiterem Vorteil ist die positive Beeinflussung der angesaugten Milchmenge. Dabei gilt, dass je mehr Milch angesaugt wird, desto kälter ist der austretende Milchschaum. Deshalb wird versucht, so wenig wie möglich Milch anzusaugen. Ab einer gewissen Schwelle kann jedoch die Emulgierkammer 3 nicht mehr gefüllt werden, und der Auslauf spritzt wieder. Durch das Reflektorelement 8 kann die Emulgierkammer zügig befüllt und gleichzeitig verhindert werden, dass Milchschaum die Emulgierkammer 3 verlässt, bevor diese vollständig gefüllt ist.

Die trompetenartige Gestalt der Emulgierkammer 3 trägt darüber hinaus dazu bei, möglichst viel Volumen für den Milchschaum auf kurzer Strecke bereitstellen zu können, ohne jedoch ein Totvolumen entstehen zu lassen, in welches der Milchstrahl nicht reicht.

### Bezugszeichenliste

- 1: Emulgiervorrichtung
- 2: Gehäuse
- 3: Emulgierkammer
- 4: erster axialer Endabschnitt
- 5: zweiter axialer Endabschnitt
- 6: Zuführungsleitung
- 7a, 7b: Abführungsleitung
- 8: Reflektorelement
- 9a, 9b: Milchschaum-Auslassöffnung
- 10: Milchschäumer
- 11: Milch-Zuführung
- 12: Deckel
- 13: Rastverbindung
- 14: unteres Teil des Gehäuses 2
- 15: oberes Teil des Gehäuses 2

## Patentansprüche

1. Emulgiervorrichtung (1) für einen Milchschäumer einer Kaffeemaschine, mit einem Gehäuse (2), in welchem eine Emulgierkammer (3) zum Emulgieren von Milchschaum vorgesehen ist, wobei die Emulgierkammer (3) als sich entlang einer axialen Richtung (A) erstreckender konusartiger Hohlkörper ausgebildet ist, wobei im Bereich eines ersten axialen Endabschnitts (4) der Emulgierkammer (3) eine Zuführungsleitung (6) zum Einbringen von zu emulgierendem Milchschaum und im Bereich eines zweiten axialen Endabschnitts (5) der Emulgierkammer (3) wenigstens eine Abführungsleitung (7a, 7b) zum Abführen des Milchschaums vorgesehen ist, wobei im Bereich des zweiten axialen Endabschnitts (5) der Emulgierkammer (3) ein Reflektorelement (8) angeordnet ist, welches den in die Emulgierkammer (3) eingebrachten Milchschaum in verschiedene Richtungen in die Emulgierkammer (3) zurückwirft, bevor dieser die Emulgierkammer (3) verlässt.

2. Emulgiervorrichtung nach Anspruch 1,**dadurch gekennzeichnet, dass** das Reflektorelement (8) in der Art eines der Emulgierkammer konkav zugewandten Kugelsegments oder Bogensegments ausgebildet ist.

3. Emulgiervorrichtung nach Anspruch 1 oder 2, **dadurch gekennzeichnet, dass** der erste axiale Endabschnitt (4) der Emulgierkammer (3) entgegen der axialen Richtung (A) in die Zuführungsleitung (6) übergeht.

4. Emulgiervorrichtung nach einem der Ansprüche 1 bis 3, **dadurch gekennzeichnet, dass** der zweite axiale Endabschnitt (5) der Emulgierkammer (3) radial außen in die Abführungsleitung (7a, 7b) übergeht.

5. Emulgiervorrichtung nach einem der vorhergehenden Ansprüche, **dadurch gekennzeichnet, dass** genau zwei Abführungsleitungen (7a, 7b) vorgesehen sind, die einander bezüglich der radialen Richtung (R) der Emulgierkammer (3) gegenüberliegen.

6. Emulgiervorrichtung nach einem der vorhergehenden Ansprüche, **dadurch gekennzeichnet, dass** das Reflektorelement (8) integral am Gehäuse (2) ausgeformt ist.

7. Emulgiervorrichtung nach einem der vorhergehenden Ansprüche, **dadurch gekennzeichnet, dass** die als konusartiger Hohlkörper ausgebildete Emulgierkammer (3) eine Querschnittsfläche (Q) aufweist, welche entlang der axialen Richtung (A) vom ersten zum zweiten axialen Endabschnitt (4, 5) hin zunimmt.

8. Milchschäumer (10) zum Aufschäumen von Milch, mit einer Emulgiervorrichtung (1) nach einem der Ansprüche 1 bis 7, wobei die Zuführungsleitung (6) fluidisch mit einer am Gehäuse (2) vorgesehenen Milch-Zuführungsöffnung (11) zum Einbringen von Milch in die Emulgierkammer (3) und mit einer in einem Deckel (12) vorgesehenen Wasserdampf-Zuführung zum Zuführen von Wasserdampf in die Emulgierkammer (3) verbunden ist.

9. Kaffeemaschine mit einer Brühkammer und mit einem Milchschäumer (10) nach Anspruch 8.
